# EUROPEAN PATENT APPLICATION

(11) **EP 4 732 678 A1**
(43) Date of publication of application: **29.04.2026**
(21) Application number: 25210440.1
(22) Date of filing: 22.10.2025
(51) Int. Cl.: A23N 1/02, B02C 13/00, C11B 1/04

(54) **CRUSHER OF A CRUSHING MACHINE COMPRISING AN IMPROVED COVER**

(30) Priority: 24.10.2024 IT 202400023748
(71) Applicant: PIERALISI MAIP SOCIETA' PER AZIONI, 60035 Jesi (AN) (IT)
(72) Inventor: GIARDINIERI, Simone, 60035 JESI (AN) (IT); GASPARINI, Mauro, 60035 JESI (AN) (IT); PIERPAOLI, Martina, 60019 SENIGALLIA (AN) (IT)
(74) Representative: Baldi, Claudio

(57) **Abstract**

Crusher (100) of a crushing machine (M); the crusher (100) comprises a cover (C) disposed on a front edge (15) of a hub (1) of the crusher (100), comprising at least two angular sectors (Cx), each one comprising a first portion (5) and a second portion (6) disposed side by side; wherein said first portion (5) and said second portion (6) are arranged and shaped in such a way as to generate perimeter cutting edges (R1) and front cutting edges (R2) suitable for intercepting and cutting the material contained in the crushing chamber of the crushing machine (M).

## Description

The present patent application for industrial invention relates to a crusher of a crushing machine comprising an improved cover.

The sector of reference is the oil sector, i.e., the sector that processes oleaginous fruits, such as olives and the like, in order to obtain oil.

As it is known, both in the oil industry and in other vegetable oleaginous sources, olives or oleaginous fruits undergo a preliminary treatment, which is known as crushing, to break the fruits with the pit and produce a paste that is used in a subsequent kneading process.

The present invention relates specifically to the crushing of oleaginous fruits.

As it is known, crushing is used to break down oleaginous fruits, in particular olives, in order to release the oil contained in the vacuoles of the oleiferous cells. Moreover, crushing releases the endogenous enzymes that are responsible for the formation of the chemical and sensory characteristics of the oil (lipoxygenase, glycosidase, hydrolase, polyphenol oxidase, and peroxidase).

Currently, the most popular crushing machines comprise a crushing chamber where the oleaginous fruits are crushed to obtain the paste. The crushing chamber is bounded by a cylindrical grid perimetrically, by a rear wall posteriorly, and by a front wall anteriorly.

A rotating crusher is arranged inside the crushing chamber and comprises:
- a central hub that is integrally connected to a shaft of the crushing machine;
- arms that support blades or tools with ending edges suitable for scraping the inner surface of the cylindrical grid;
- a cover attached to the central hub by means of screws.

The cover is basically a cap-shaped cover with a circular cross-section and a flat front surface.

The fruits are crushed inside the crushing chamber until a paste is obtained and is expelled through the openings (generally holes) of the cylindrical grid because of the centrifugal force.

The applicant has noted that the cover of the crusher, which is shaped like a cap with a flat front face, does not allow to increase the crushing efficiency of the crusher; furthermore, being completely exposed, the screw heads are intercepted by the material contained in the crushing chamber during the rotation of the crusher, causing the erosion of the screw heads, with the consequent release of metallic substances inside the crushing chamber, which inevitably alter the organoleptic and chemical properties of the oil.

EP3865214A1 describes a hammer crusher for extracting oil from olives.

EP4331385A1 describes an olive crusher and a crushing machine comprising said crusher.

The purpose of the present invention is to overcome the drawbacks of the prior art by devising a new crusher provided with a new cover that is capable of increasing the effectiveness and operational efficiency of the crusher.

Another purpose of the present invention is to overcome the drawbacks of the prior art by devising a new crusher provided with the new cover that is capable of protecting the screw heads, thus reducing the undesirable effect of erosion of the screw heads.

These purposes are achieved in accordance with the invention with the features listed in the attached independent claim 1.

Advantageous embodiments appear from the dependent claims.

The crusher according to the invention is defined by claim 1.

For greater clarity of explanation, the description of the crusher according to the invention continues with reference to the attached drawings, which are for illustrative purposes only and not limiting, wherein:
Fig. 1 is an exploded axonometric view of a crusher according to the invention;
Fig. 2 is an axonometric view of the cover of the crusher according to the invention;
Fig. 3 is a detail of two angular sectors of the cover;
Fig. 4 is a detail of one angular sector of the cover;
Fig. 5 is a section of the cover shown in Fig. 2 sectioned along the plane V-V;
Fig. 6 is a section of the cover shown in Fig. 2 sectioned along the plane VI-VI;
Fig. 7 is an axonometric view of a crushing machine comprising the crusher according to the invention;
Fig. 8 is a diagrammatic sectional view of the crushing machine shown in Fig. 7 sectioned along a vertical plane passing through the axis of rotation of the shaft of the crushing machine.

With reference to the attached figures, a crusher according to the invention, which is generally indicated with reference numeral "100," is described.

The crusher (100) is suitable for being disposed inside a conventional crushing chamber of a crushing machine (M) and rotatably coupled with a shaft (A) of the crushing machine.

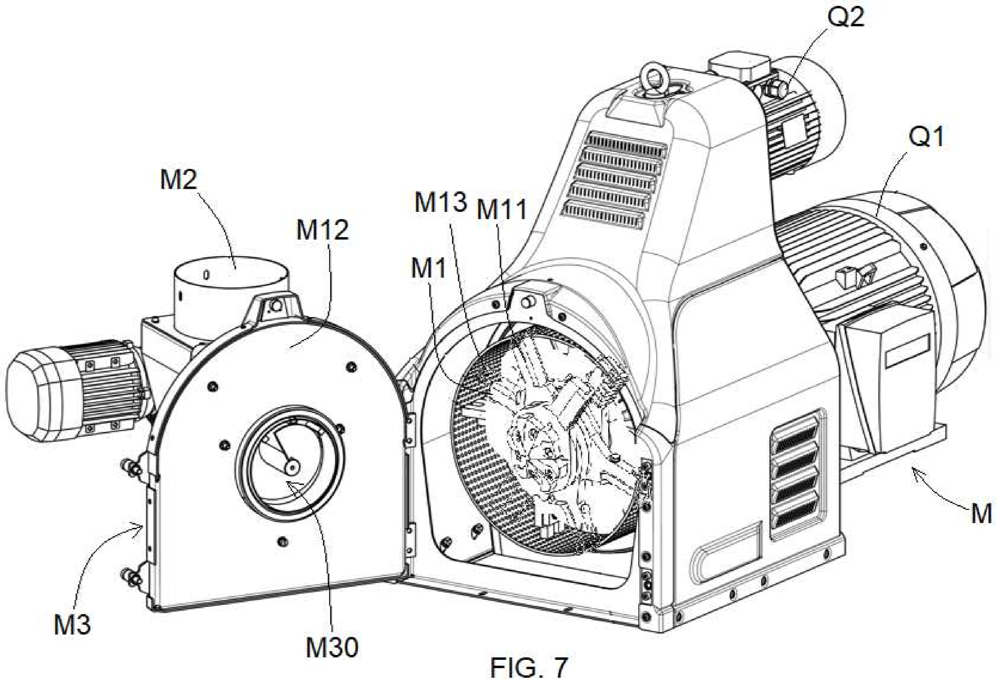

With reference to Fig. 7, a crushing machine (M) is shown only by way of example.

The crushing machine (M) comprises:
- a crushing chamber (M1) suitable for containing oleaginous fruits, in particular olives, that are crushed to obtain a paste; the crushing chamber (M1) is bounded by a rear wall (M11) posteriorly, by a front wall (M12) anteriorly, and by a cylindrical grid (M13) perimetrically;
- a shaft (A) passing through the rear wall (M11) of the crushing chamber (M1), said shaft (A) having an axis of rotation (X) and being suitable for being connected to first drive means (Q1) of the crushing machine so as to rotate about the axis of rotation (X);
- the crusher (100) according to the invention connected to the shaft (A),
- a front door (M3) that is suitable for closing the crushing chamber (M1) and defining the front wall (M12) of the crushing chamber (M1) when closed;
- a feed system for feeding the oleaginous fruits into the crushing chamber (M1); said feed system is mounted on the front door (M3) and comprises a hopper (M2) wherein the oleaginous fruits are loaded, and a large circular opening (M30) coaxial with the axis of the shaft (A) that ends into the crushing chamber (M1) to convey the oleaginous fruits loaded into the hopper (M2) into the crushing chamber (M1);
- a discharge outlet, which is not shown in the attached figures, for discharging the puree obtained from crushing the oleaginous fruits.

The crushing machine (M) may further comprise second drive means (Q2) suitable for rotating the cylindrical grid (M13) in the opposite direction with respect to the rotational direction of the shaft (A).

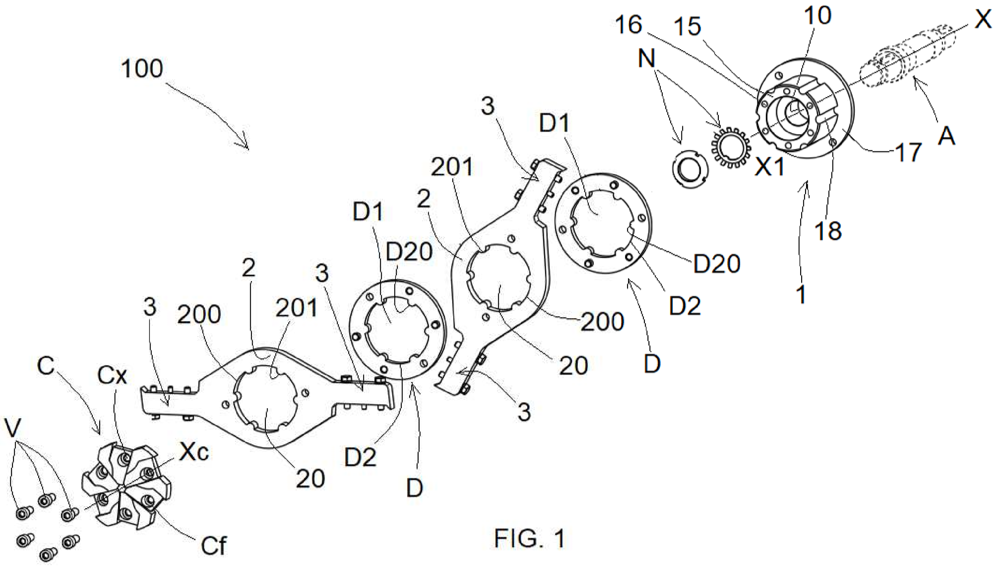

With reference to Fig. 1, the crusher (100) comprises a hub (1) with an axis (X1). The hub (1) is suitable for being integrally and rotatably connected to said shaft (A). The hub (1) comprises a cylindrical axial seat (10) suitable for fitting the shaft (A) and being integrally coupled to the shaft (A). The cylindrical axial seat (10) is integrally coupled to the shaft (A) by means of coupling means (N) comprising a nut locking system with conical fitment.

The hub (1) has an annular front edge (15) comprising threaded holes (16). The hub (1) comprises a stop flange (17) located at a rear end of the hub (1).

The crusher (100) further comprises a cover (C) disposed in opposite position to the front edge (15) of the hub (1) and having a central axis (Xc) coaxial with the axis (X1) of the hub (1). The cover (C) has through holes (Cf) aligned with the threaded holes (16) of the front edge (15) of the hub (1).

Screws (V) are inserted into the through holes (Cf) of the cover (C) and screwed into the threaded holes (16) of the front edge (15) of the hub (1).

The crusher (100) further comprises tool support arms (3) that protrude outwardly from the hub (1). Although not shown in the accompanying figures, said tools can either be made in one piece with the arms (3) or can be separated from the arms (3) and connected to the arms (3) by means of removable connection means (7) that removably connect the blade to the arm. For illustrative purposes, the connection means (7) used for such a removable connection are threaded parts. Although the tools may have different configurations, they always have an ending edge suitable for scraping the cylindrical grid (M13) of the crushing chamber (M1).

Advantageously, the crusher (100) further comprises one or more arm-holding plates (2), each one incorporating one or more of said arms (3). Each arm-holding plate (2) has a central hole (20) suitable for fitting the hub (1).

Anti-rotational means (18, 201) integrally and rotatably connect said arm-holding plate (2) to said hub (1).

Said anti-rotational means (18, 200) are configured to provide a grooved coupling between the arm-holding plate (2) and the hub (1).

In particular, said anti-rotational means (18, 201) comprise:
- longitudinal grooves (18) formed on the outer surface of the hub (1);
- protuberances (201) that protrude from a perimeter edge (200) delimiting the hole (20) of the arm-holding plate (2) and are coupled with said longitudinal grooves (18) of the hub (1).

Spacers (D) may be arranged around the hub (1), each one having a hole (D1) suitable for fitting the hub (1). Coupling means (18, D20) integrally and rotatably connect said hub (1) to said spacers (D). Said coupling means (18, D20) are configured to provide a grooved coupling between the spacer (D) and the hub (1).

The coupling means (18, D20) always comprise the longitudinal grooves (18) formed on the outer surface of the hub (1) and protuberances (D20) that are formed on a perimeter edge (D2) delimiting the hole (D1) of the spacer (D) and are coupled with said longitudinal grooves (18) of the hub (1) .

The arm-holding plate (2) or arm-holding plates (2) and said spacers (D) are enclosed in a package and compressed between the stop flange (17) of the hub (1) and the cover (C).

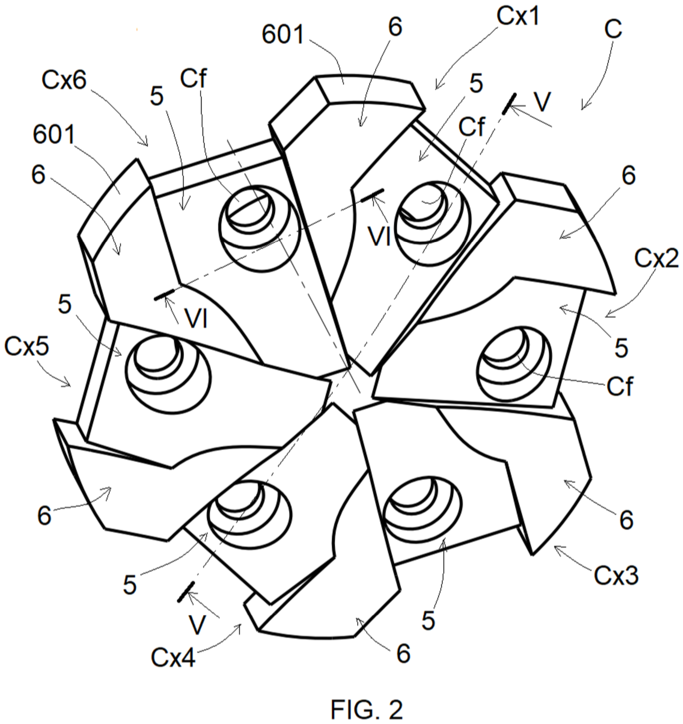

With reference to Fig. 2, the cover (C) has a particular shape and comprises two or more angular sectors (Cx), namely six angular sectors (Cx1, Cx2, Cx3, Cx4, Cx5, Cx6).

Each angular sector (Cx) comprises a first portion (5) and a second portion (6) disposed side by side.

It should be noted that the terms "first" portion (5) and "second" portion (6) refer to the relative position of the two portions in sequence based on the rotational direction of the cover (C) and of the hub (1). More precisely, taking into account the rotational direction of the cover (C), the first portion (5) always precedes the second portion (6) of the same angular sector (Cx).

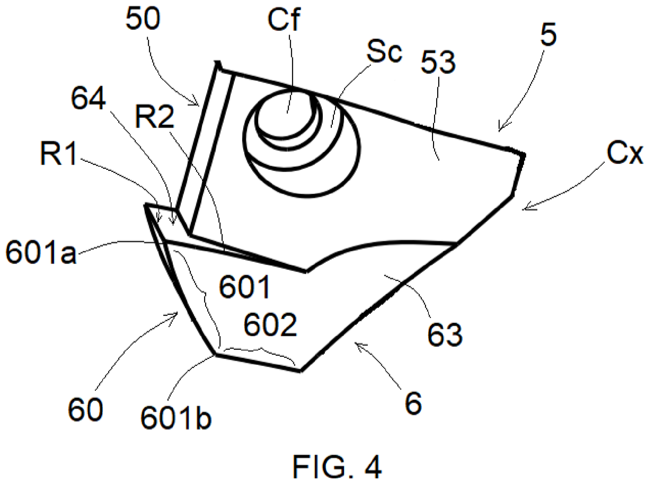

With reference to Fig. 4, the first portion (5) of each angular sector (Cx) comprises an outer edge (50) facing the outside of the cover (C), and a front surface (53) facing in the opposite direction with respect to the position of the hub (1).

Similarly, the second portion (6) of each angular sector (Cx) comprises an outer edge (60), facing the outside of the cover (C), and a front surface (63) facing in the opposite direction with respect to the position of the hub (1).

With reference to Fig. 4, the outer edge (60) of the second portion (6) of an angular sector (Cx) is misaligned with respect to the outer edge (50) of the first portion (5) and protrudes outwardly with respect to the outer edge (50) of the first portion (5) of the same angular sector (Cx), so as to generate a perimeter cutting edge (R1).

Again with reference to Fig. 4, the front surface (53) of the first portion (5) of an angular sector (Cx) is not coplanar with the front surface (63) of the second portion and is lowered with respect to the front surface (63) of the second portion (6) of the same angular sector (Cx), so as to generate a front cutting edge (R2).

During the rotation of the crusher (100), the cutting edges (R1, R2) have the function of intercepting the material (olives and oleaginous fruits) contained in the crushing chamber, which is crushed and broken. Therefore, the cutting edges (R1, R2) assist the blades or the tools disposed on the arms (3) in crushing the material contained in the crushing chamber, increasing the effectiveness of the crusher (100).

The front cutting edge (R2) has a substantially V-shape with the concavity facing the first portion (5).

The front cutting edge (R2) and the perimeter cutting edge (R1) are orthogonal to each other and delimit a cutting surface (64) of the second portion (6) facing in the same rotational direction as the cover (C).

The outer edge (60) of the second portion (6) has a curved section (601) that extends along an arc of a circumference ending anteriorly with said perimeter cutting edge (R1). Posteriorly, the curved section (601) is joined with an inclined section (602).

Returning to Fig. 2, it can be seen that the curved sections (601) of the outer edges (60) of the second portions (6) all lie on the same circumference centered on the central axis (Xc) of the cover (C).

Instead, the outer edge (50) of the first portion (5) is completely flat.

Such a shape of the outer edges (50, 60) of the first portions (5) and of the second portions (6) means that the cover (C) has an indented perimeter profile comprising a set of perimeter teeth, as shown in Fig. 2.

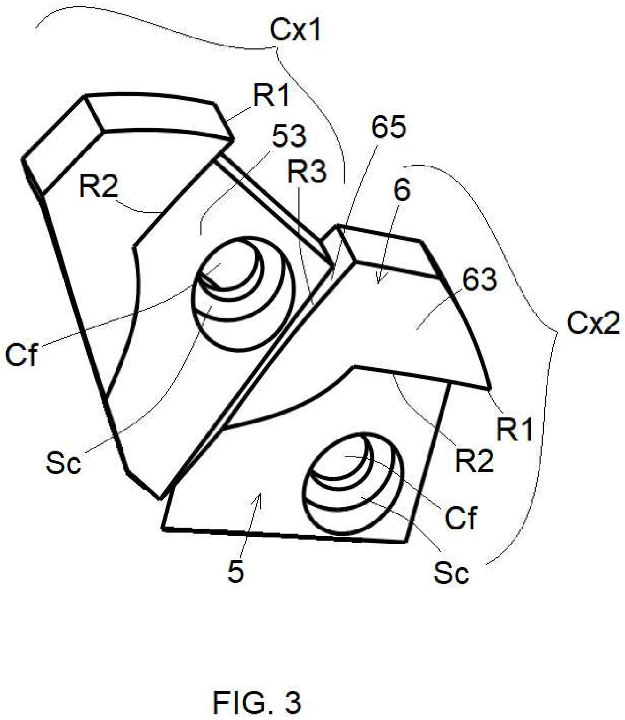

With reference to Figs. 2 and 3, the front surfaces (63) of the second portions (6) of the angular sectors (Cx) are all coplanar and orthogonal to the central axis (Xc) of the cover (C).

The front surfaces (53) of the first portions (5) are all lowered with respect to the front surfaces (63) of the second portions (6) in such a way that a protective front edge (R3) is provided between the front surface (53) of the first portion (5) of an angular sector (Cx1) and the front surface (63) of the second portion (6) of an adjacent sector (Cx2).

The protective front edge (R3) extends along a radial direction with respect to the central axis (Xc) of the cover (C).

The protective front edge (R3) superiorly delimits a protective surface (65) of the second portion (6), facing in the opposite direction to the rotational direction of the cover (C).

The through holes (Cf) are made at the first portions (5) near the protective front edge (R3). Otherwise said, the through holes (Cf) are located close to (i.e., just behind) the protective surface (65).

Therefore, depending on the rotational direction of the cover (C), the head of each screw (V) is concealed behind the protective surface (65), superiorly defined by the protective front edge (R3).

In view of the above, during the rotation of the cover (C), the material (oleaginous fruits or olives) contained in the crushing chamber does not intercept the heads of the screws (V), thus reducing the erosion phenomena that impair the conventional covers of the crushers of the prior art.

Advantageously, a cylindrical seat (Sc) is formed on the front surface (53) of each first portion (5), in coaxial position to the through hole (Cf) and having a larger diameter than the through hole (Cf) so as to accommodate the head of the screw (V). In this way, the head of the screw (V) does not protrude from the front surface (53) of the first portion, thus further reducing its capacity of intercepting the material in the crushing chamber during the rotation of the cover (C).

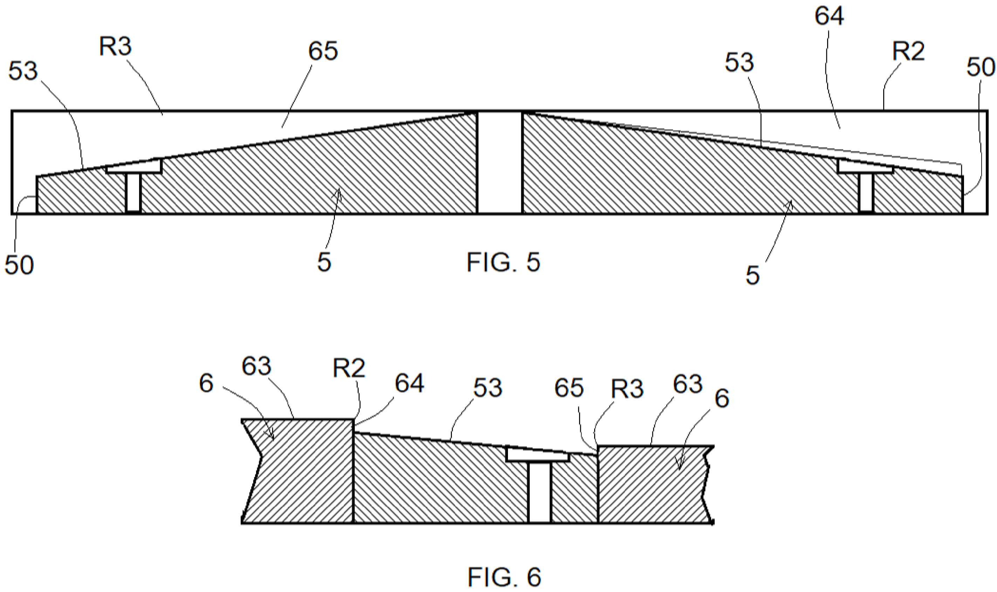

With reference to Fig. 5, preferably, the front surface (53) of the first portion (5) of each angular sector (Cx) lies on a plane that is not orthogonal to the central axis (Xc) and is inclined with respect to a plane orthogonal to the central axis (Xc) towards the outer edge (50) of the first portion (5) in such a way that the cutting surfaces (64) and the protective surfaces (65) have an increased height going towards the outside of the cover (C).

Furthermore, with reference to Fig. 6, the front surface (53) of the first portion (5) of each angular sector (Cx) lies on a plane that is also inclined, with respect to the plane orthogonal to the central axis (Xc) towards the second portion of the adjacent angular sector (Cx).

The inclination of the front surface (53) of the first portion (5) prevents the material from depositing on the front surface (53) of the first portion (5).

In fact, the outward inclination favors a radial discharge of the material deposited on the front surface of the first portion (5), whereas the inclination towards the second portion (6) of another adjacent angular sector (Cx) means that the cutting surface (64) has a lower height than the protective surface (65) and is such that it does not hinder the passage of material from the front surface (53) of the first portion (5) towards the front surface (63) of the second portion (6) of the same angular sector (Cx).

Following the above description, it is now clear that the configuration of the cover (C) of the crusher (100) according to the invention allows to increase the operating efficiency of the crusher (100) because of the cutting edges (R1, R2), on one hand, and to reduce the erosion of the screws thanks to the protective front edges (R3), on the other hand.

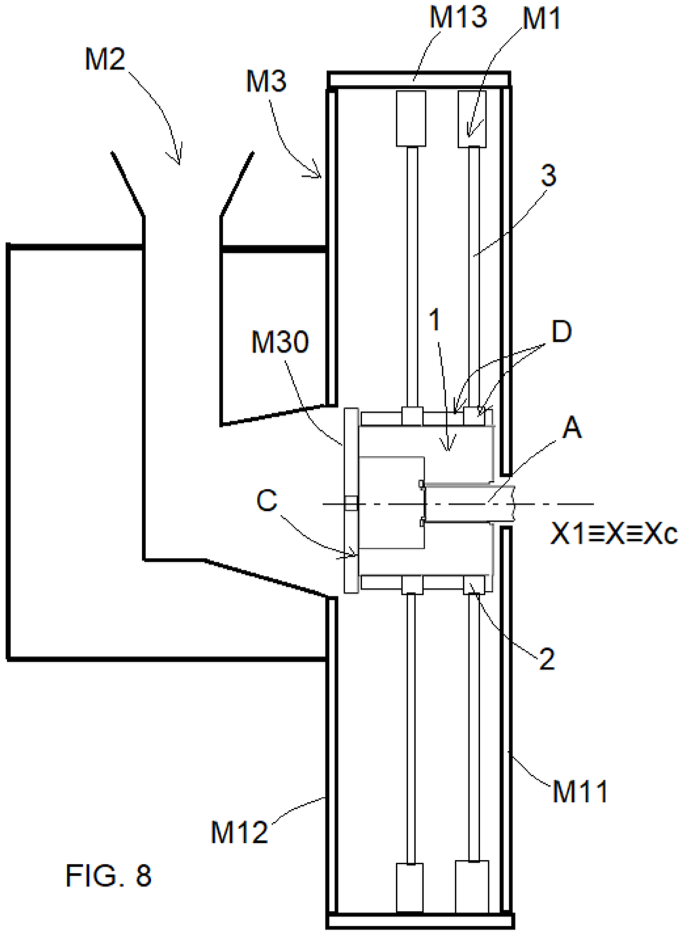

With reference to Fig. 8, when the crusher (100) is connected to the shaft (A) of the crushing machine (M), the cover (C) is positioned in front of or in correspondence with the large circular opening (M30) formed in the front door (M3) and is hit frontally by the olives or by the oleaginous fruits passing through the circular opening (M30).

Thanks to the cutting edges (R1, R2), said cover (C) performs a pre-crushing operation in which the oleaginous fruits entering the chamber undergo a first, coarse crushing.

Numerous modifications can be made to the present embodiment of the invention, which are within the reach of an expert of the field and fall in any case within the scope of the invention as disclosed by the attached claims

## Claims

1. Crusher (100) of a crushing machine (M) for oleaginous fruits, such as olives and the like; wherein said crushing machine comprises a shaft (A) with an axis of rotation (X) that is suitable for being connected to drive means of the crushing machine so as to be rotated about the axis of rotation (X); and wherein said crusher (100) comprises:
- a hub (1) with an axis (X1) that is suitable for being integrally and rotatably connected to said shaft (A); wherein said hub (1) has a front edge (15) comprising threaded holes (16);
- tool support arms (3) protruding outwardly from the hub (1) and integral with the hub (1);
- a cover (C) disposed opposite the front edge (15) of the hub (1) and having a central axis (Xc) coaxial with the axis (X1) of the hub (1); wherein said cover (C) has through holes (Cf) aligned with the threaded holes (16) of the front edge (15) of the hub (1);
- screws (V) inserted into the through holes (Cf) of the cover (C) and screwed into the threaded holes (16) of the front edge (15) of the hub (1);
**characterized by** the fact that
said cover (C) comprises at least two adjacent angular sectors (Cx); each angular sector (Cx) comprising a first portion (5) and a second portion (6) disposed side by side;
wherein said first portion (5) comprises an outer edge (50) and a front surface (53) facing in the opposite direction with respect to the position of the hub (1);
wherein said second portion (6) comprises an outer edge (60) and a front surface (63) facing in the opposite direction with respect to the position of the hub (1);
wherein:
- the outer edge (60) of the second portion (6) of an angular sector (Cx) is misaligned with respect to the outer edge (50) of the first portion (5) and protrudes outwardly with respect to the outer edge (50) of the first portion (5) of the same angular sector (Cx), so as to generate a perimeter cutting edge (R1); and/or
- the front surface (53) of the first portion (5) of an angular sector (Cx) is not coplanar and is lowered with respect to the front surface (63) of the second portion (6) of the same angular sector (Cx), so as to generate a front cutting edge (R2).

2. The crusher (100) according to claim 1, wherein the front surfaces (63) of the second portions (6) of the angular sectors (Cx) are all coplanar and orthogonal to the central axis (Xc) of the cover (C);
wherein the front surfaces (53) of the first portions (5) of the angular sectors (Cx) are lowered with respect to the front surfaces (63) of the second portions (6) in such a way that a protective front edge (R3) is provided between the front surface (53) of the first portion (5) of an angular sector (Cx) and the front surface (63) of the second portion (6) of an adjacent sector (Cx);
wherein said through holes (Cf) are formed at said first portions (5) near the protective front edge (R3).

3. The crusher (100) according to claim 2, wherein the front surface (53) of the first portion (5) of each angular sector (Cx) lies on a plane that:
- is not orthogonal to the central axis (Xc), and
- is inclined toward the outside of the cover (C), with respect to a plane orthogonal to the central axis (Xc).

4. The crusher (100) according to claim 2 or 3, wherein the front surface (53) of the first portion (5) of each angular sector (Cx) lies on a plane that:
- is not orthogonal to the central axis (Xc), and
- is inclined toward the second portion (6) of the adjacent angular sector (Cx), with respect to a plane orthogonal to the central axis (Xc),

5. The crusher (100) according to any of the preceding claims, wherein a cylindrical seat (Sc) is formed on the front surface (54) of each first portion (5), said cylindrical seat (Sc) being coaxial with the through hole (Cf) and having a greater diameter than the through hole (Cf) so as to accommodate a head of the screw (V).

6. The crusher (100) according to any of the preceding claims, wherein the front cutting edge (R2) has a substantially V-shape with concavity facing the first portion (5).

7. The crusher (100) according to any of claims 2 to 6, wherein said protective front edge (R3) extends along a radial direction with respect to the central axis (Xc) of the cover (C).

8. The crusher (100) according to any of the preceding claims, wherein said outer edge (60) of the second portion (6) comprises a curved section (601) extending along an arc of a circumference ending anteriorly with said perimeter cutting edge (R1);
wherein the curved sections (601) of the outer edges (60) of the second portions (6) all lie on the same circumference centered on the central axis (Xc) of the cover (C).

9. The crusher (100) according to any of the preceding claims, wherein said crusher (100) comprises one or more arm-holding plates (2), each one incorporating one or more of said arms (3); wherein each arm-holding plate (2) has a central hole (20) suitable for fitting the hub (1); wherein said crusher (100) comprises anti-rotational means (18, 201) that integrally and rotatably connect said arm-holding plate (2) to said hub (1).

10. The crusher (100) according to claim 9, wherein said crusher (100) comprises spacers (D), each one having a hole (D1) suitable for fitting the hub (1); the crusher (100) further comprises coupling means (18, D20) that integrally and rotatably connect the hub (1) to the spacers (D); the hub (1) comprises a stop flange (17) located at a rear end of the hub (1); wherein the arm-holding plate (2) or arm-holding plates (2) and the spacers (D) are enclosed in a package and compressed between the stop flange (17) of the hub (1) and the cover (C).
